Europäisches Patentamt

**European Patent Office**

Office européen des brevets

(19)

(11)  **EP 1 311 093 B1**

(12)  **EUROPEAN PATENT SPECIFICATION**

(45)  Date of publication and mention
of the grant of the patent:
**02.02.2005  Bulletin 2005/05**

(51)  Int Cl.⁷: **H04L 25/03**, H04B 7/005

(21)  Application number: **01610113.1**

(22)  Date of filing: **09.11.2001**

(54)  **Co-channel interference detector for cellular communications systems**

Detektor zur Gleichkanalstörungen in zellularen Kommunikationssystemen

Détecteur d'interférence entre canaux de même fréquence pour systèmes de communication cellulaire

(84)  Designated Contracting States:
**AT BE CH CY DE DK ES FI FR GB GR IE IT LI LU MC NL PT SE TR**

(43)  Date of publication of application:
**14.05.2003  Bulletin 2003/20**

(73)  Proprietor: **Telefonaktiebolaget LM Ericsson (publ)**
**164 83 Stockholm (SE)**

(72)  Inventors:
• **Lindoff, Bengt**
**237 36 Bjärred (SE)**

• **Holst, Jan**
**240 10 Dalby (SE)**
• **Nordström, Frederik**
**227 34 Lund (SE)**

(74)  Representative: **Sigh, Erik et al**
**Zacco Denmark A/S**
**Hans Bekkevolds Allé 7**
**2900 Hellerup (DK)**

(56)  References cited:
**WO-A-00/41317**          **WO-A-96/11534**
**US-A- 5 995 499**        **US-B1- 6 295 290**

## Description

### Technical field of the invention

This invention relates to a method and a mobile station for detecting co-channel interference (CCI) in a wireless cellular communications system including at least two base stations using the same frequency, and to a mobile radio station such as a mobile communications device or a mobile telephone for use in such a communications system. The invention will be useful in TDMA and FDMA systems such as GSM and IS-136.

### Technical background of the invention

In cellular wireless communications systems each base station covers a geographical area called a cell. Neighbouring cells usually use different frequencies. Frequencies can be reused in different cells, and cells using the same frequency are usually separated geographically by at least one intermediate cell using a different frequency. A mobile telephone or other mobile communications device in one cell, called the home cell, will normally be served by the base station, called the home base station, in the home cell. For two cells using the same frequency their mutual geographical distance may not always give sufficient attenuation of their signals to ensure that their signals do not interfere with each other, especially for areas with intense mobile communication, where, for capacity reasons, frequencies need to be re-used. Consequently, it may happen that, at some locations in the home cell, the mobile telephone can receive signals from a remote base station in a remote cell using the same frequency. The remote base station handles information or traffic, which is unrelated to the information or traffic handled by the home base station. When signals from two unrelated base stations using the same frequency are received by a mobile telephone, the signals from the remote base station may disturb or interfere with the signals received from the home base station. This is an undesired phenomenon called co-channel interference (CCI), and the remote base station is called a co-channel interferer.

The use of mobile communication has increased significantly resulting in an increasing density of mobile stations such as mobile phones, in particular in metropolitan areas. In order to increase the capacity in modern Time Division Multiple Access (TDMA) cellular systems, such as Global System for Mobile Communication (GSM) or Enhanced Data rate for GSM Evolutions (EDGE), the density of base stations are increased correspondingly, and the cells are proportionally reduced in size. Hereby remote base stations using the same frequency as the home base station are placed closer to the home cell, which may increase the problem of co-channel interference. The capacity will thus be limited by interference phenomena and not by the sensitivity of the system, because near co-channel interferers will dominate the noise figure (i.e., the amount of undesired signal added in a received signal by the environment). Therefore, a significant portion of the noise received by a receiver will not be due to random noise but will be caused by co-channel interference. However, when designing a conventional receiver for a TDMA system, for instance in a mobile phone, the disturbance is often modelled as white noise. Thus, conventional receiver design is optimized for the sensitivity limited case and not for the interference limited case.

Suppression of co-channel interference requires knowledge of the desired channel, ie the transmissions from the home base station, and of the interfering co-channel for the co-channel interference suppression to be efficient. The mobile station knows the characteristics of the home channel, but in most cases the interfering co-channel is unknown, and its characteristics will therefore have to be estimated. Relevant transmission channel characteristics include in particular the channel impulse response and the relative time difference between the desired signal from the home base station and the signal from the interfering co-channel. The impulse response is the received signal that would result from a short impulse being transmitted from the transmitter.

In general, in the state of the art systems for interference suppression, co-channel interferers are demodulated or estimated using an equaliser, and estimated interference symbols are subtracted from the received symbols, whereby, in principle, only desired symbols remain. Co-channel interferers can be demodulated or estimated in several known ways. After the interference symbols have been subtracted from the received symbols, the remaining symbols are demodulated to extract the useful information from each burst or unit of transmitted signal.

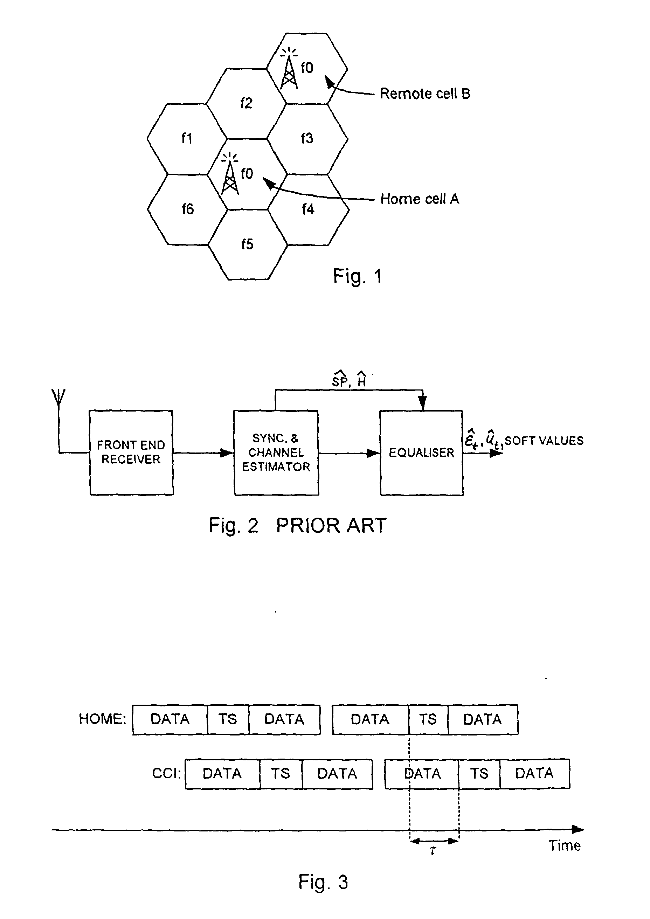

Figure 2 shows a simplified block diagram of a conventional TDMA receiver. In the front-end receiver the received signal is down-converted, filtered, A/D converted and sampled at a symbol rate. Mathematically, the output from the front-end receiver can be written as

$$y_t = \sum_{k=0}^{L} h_k u_{t-k} + e_t = H^T U_t + e_t \qquad (1)$$

where

$H^T = [h_0,...,h_L]^T$ is a complex-valued vector representing the radio channel of the home cell, ie the desired channel,

$U_t = [u_t,...,u_{t-L}]^T$ is a complex-valued vector representing the transmitted symbols in the home cell, eg 8-Phase Shift Keying (8-PSK), and

$e_t$ is noise, which is often assumed to be random or white noise.

A received burst contains a known symbol pattern, also known as a training sequence, which is recognised as such in the receiver. From the front-end receiver a received burst is fed to a synchronization and channel estimator that correlates the received burst with the known training sequence in order to find the synchronization position, ie the position within the received burst at which the training sequence starts. After the synchronization position is determined, channel estimation is performed in order to estimate the radio channel parameters $H$. Standard estimation techniques well known in the art, such as Least Squares and the like, can be used to obtain the channel estimate. The received burst, the estimated channel parameters $H$ and the synchronization position are then fed to an equalizer that detects the transmitted symbols. Conceptually, the equalizer tries to find the symbols minimizing the following:

$$\hat{u}_j = \arg\min_{u \in S} \sum_{t=1}^{N} \left| y_t - \sum_{k=0}^{L} \hat{h}_k u_{t-k} \right|^2 , \ 1 \leq j \leq N \qquad (2)$$

where S represents the symbol constellation (ie, the set of symbols define for the given type of modulation, such as 8-PSK). The output from the equalizer is the decided hard symbol, the residuals given as:

$$\hat{\varepsilon}_t = y_t - \sum_{k=0}^{L} \hat{h}_k \hat{u}_{t-k}$$

and a soft value, representing the uncertainty of the symbol estimate. The above described systems are well known in the art, see [1].

In a communications system where the receive or downlink frequency is reused in two or more cells the frequency reuse may introduce interfering signals or noise in the serving cell or home cell from the remote base station in a neighbouring or remote cell using the same frequency. As a result the signals received by the mobile station in the home cell will contain information from other base stations as well as noise. In a scenario with co channel interference, and in particular where the cells are small, and co-channel interferers are close to the home base station, the random noise will be dominated by the co-channel interference, and the noise $e_t$ can no longer be assumed to be white noise. Assuming that there is one dominant co-channel interferer, a better model of the received signal is

$$y_t = \sum_{k=0}^{L} h_k u_{t-k} + \sum_{k=0}^{L} g_k v_{t-k} = H^T U_t + G^T V_t + e_t \qquad (3)$$

where

$G^T = [g_0,...,g_L]^T$ is a complex-valued vector representing the radio channel for the CCI,

$V_t = [v_t,...,v_{t-L}]^T$ is a complex-valued vector representing the transmitted symbols of the CCI, and

$c_t$ is the noise, which is here assumed to be much smaller than the CCI signal.

The desired signal from the home base station and the CCI signal cannot be expected to be in synchronism, ie the bursts do not arrive at the same time at the receiver antenna (see figure 3), different techniques for rejecting the CCI signal, depending on the relative timing of the desired signal and the CCI signal. Good rejection of the CCI signal requires a correspondingly good estimate of the relative timing, or the synchronisation (short: sync.) position of the CCI signal. Further, the training sequence used by the CCI also needs to be found, since it in most cases is unknown. Thus there is a need for an efficient method of detecting co-channel interference by estimating the channel parameters, and in particular the synchronisation position and the training sequence, of a potential co-channel interferer. This will form the basis of cancelling the co-channel interference, whereby performance of the communications system will be improved.

WO 96/11534 claims a method of interference cancellation in a data transmission system, which utilizes a multiple access interference cancellation method, in which estimates of interfering signals are subtracted from the desired signal, and in which a confidence coefficient is calculated for the estimates obtained from the received signal. Confidence coefficients calculated for the estimates of the interfering signals are utilized in the multiple access interference cancellation method.

WO 00/41317 discloses a method for co-channel interference cancellation in a receiver. The desired signal and an interfering co-channel signal are estimated using their respective training sequences. Residual signals are formed, which describe the differences between the received signal and the desired signal estimate and the co-channel signal estimate, respectively. Channel estimate vectors and channel estimation matrices are formed of the desired signal and the interference signal by means of their training sequences and are used for forming desired signal and co-channel signal estimates.

It is the object of the invention to provide a co-channel interference detector that is faster and more efficient than the prior art co-channel interference detectors.

**Summary of the invention**

The invention offers a method of estimating the channel parameters, and in particular the synchronisation position and the training sequence, of a co-channel interferer in a TDMA communications system such as the GSM system and the EDGE system. First, initial estimates of the home cell radio channel, ie the desired channel, and of the data symbols of the desired channel are made. Then, a fraction of the estimated desired signal is subtracted from the received signal, whereby a residual signal is created. The fraction depends on the uncertainty of the desired signal. Then, a correlation is performed between the residual signal and all possible training sequences, and the synchronisation position of the co-channel interferer is obtained. The thus obtained synchronisation information is then used in any suitable co-channel interference rejection algorithm, which is not part of the invention.

In a pre-processing stage only rough estimates of the desired transmission channel and of the desired data symbols are needed. A fraction of the roughly estimated desired data symbols is subtracted from the received signal whereby a more "clean" co-channel interference signal is obtained. Consequently, a much faster convergence of the algorithm used for detecting the co-channel interference results. When the co-channel interference signal has been detected, it can be eliminated by any suitable method.

**Brief description of the drawings**

Figure 1 shows the cell structure of a FDMA wireless communications system,

Figure 2 shows schematically a prior art TDMA receiver structure,

Figure 3 shows schematically the relative timing of a received desired signal and a received co-channel interfering signal, and

Figure 4 shows a preferred embodiment of the invention.

**Detailed description of the invention**

Figure 1 shows a home cell A in which the home base station uses the frequency $f_0$. A number of neighbouring cells (in this case six are shown) cover the geographical area around the home cell A, and the base stations in neighbouring cells use different frequencies $f_1$ to $f_6$, all of which in particular are also different from the frequency $f_0$ used in the home cell A. Further away from the home cell A and beyond the surrounding neighbouring cells is a remote cell B in which the remote base station uses the same frequency $f_0$ as is used in the home cell A. This is called frequency reuse. The remote base station in the remote cell B may thus cause co-channel interference to mobile stations in the home cell A.

Figure 3 shows a received desired signal from the home base station and a received interfering signal CCI from a remote base station. Each signal consists of a series of bursts, where each burst contains two data sequences with a training sequence TS between the two data sequences. The time difference between the two signals, which is also called the synchronisation position, is indicated as the time interval between the start of their respective training sequences.

Transmitted data are divided into bursts or short packets of data. Each burst includes a training sequence, which is a predefined sequence of bits occupying a predefined position in each burst. In the receiver the training sequence will be recognised as such and will be used as a synchronising signal identifying eg the start and stop positions of each burst. Base stations using the same transmit frequency use different training sequences. In addition to using different transmission frequencies neighbouring base stations may also use different training sequences.

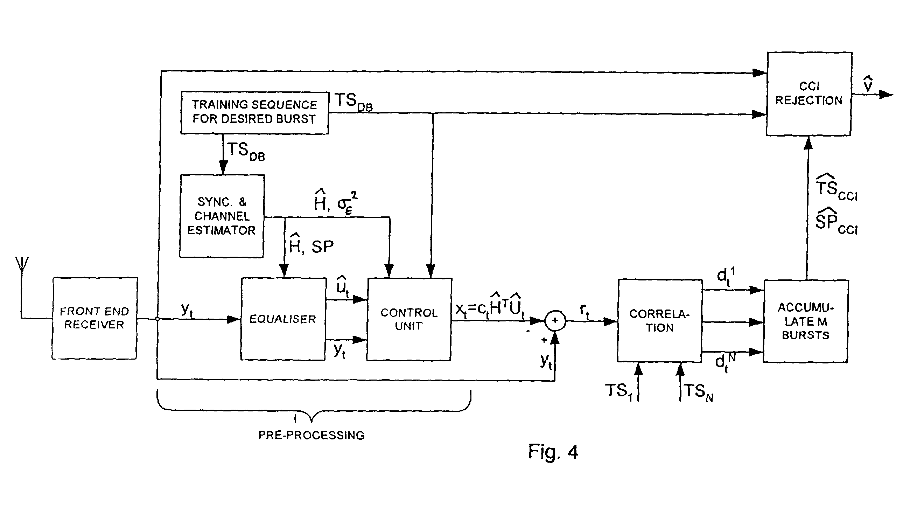

In figure 4 is shown a block diagram of the co-channel detection of the invention. In a front-end receiver received bursts are down-converted, filtered, A/D converted and sampled at a symbol rate. The received signal is assumed to be a combination of the desired signal and an undesired signal from a co-channel interferer, and, in accordance with the above, the output signal $y_t$ from the front-end receiver can thus be written mathematically as follows:

$$y_t = \sum_{k=0}^{L} h_k u_{t-k} + \sum_{k=0}^{L} g_k v_{t-k} = H^T U_t + G^T V_t + e_t \tag{3}$$

where
$H^T = [h_0,...,h_L]^T$ is a complex-valued vector representing the radio channel of the home cell, ie the desired channel,
$U_t = [u_t,...,u_{t-L}]^T$ is a complex-valued vector representing the transmitted symbols in the home cell,
$G^T = [g_0,...,g_L]^T$ is a complex-valued vector representing the radio channel for the CCI,
$V_t = [v_t,...,v_{t-L}]^T$ is a complex-valued vector representing the transmitted symbols of the CCI, and
$e_t$ is noise, which is often assumed to be white noise.

From the front-end receiver bursts are fed to a pre-processing stage, whose main task is to give a rough estimate of the desired signal and to subtract a fraction of the estimated desired signal from the received signal. The residual signal resulting from the subtraction will be examined with respect to CCI.

The pre-processing stage includes a synchronisation and channel estimator, which performs an initial and possibly just a rough estimate $H$ of the desired radio channel. For performing this estimate the estimator uses the received burst and the training sequence $TS_{DB}$ of the desired burst, which is known. Preferably, also an estimate $\hat{\sigma}_\varepsilon^2$ of the CCI noise is made using any suitable method known in the art such as the least squares method. The channel estimates $H$, the synchronisation position SP and the received burst $y_t$ are fed to the equaliser, which makes an initial detection of the desired data symbols $\hat{u}$. Only a rough estimate of the data symbols is needed, and the equaliser can therefore be of low complexity such as DFE. The estimated symbols $\hat{u}$, the CCI noise estimate $\hat{\sigma}_\varepsilon^2$, the channel estimates $\hat{H}$ of the desired channel and the training sequence $TS_{DB}$ of the desired burst are input to a control unit. Based on these inputs the control unit computes a time-dependent weighting factor $c_t$, where $0 < c_t \leq 1$, to be used for computing the residual signal $r_t$. The control unit outputs a signal $x_t$, which is an estimate of the desired channel $\hat{H}^T \hat{U}_t$, which consists of both estimated symbols $\hat{u}$ and an estimate $H$ of the channel, multiplied by the weighting factor $c_t$ according to the following formula:

$$x_t = c_t \hat{H}^T \hat{U}_t \tag{4}$$

After the pre-processing stage the residual signal $r_t$ is calculated according to the following formula:

$$r_t = y_t - x_t \tag{5}$$

The residual signal $r_t$ is fed to a correlation unit that correlates the residual signal $r_t$ with all possible training sequences $TS_1$-$TS_N$ for the undesired signal. The mobile receiving station knows these training sequences. In GSM/EDGE, eight training sequences are used. The correlation results $d_{t,l}^j$ for $TS_i$ at time offset $t$ for burst $l$ are fed to an accumulation unit that accumulates the results over M bursts. The estimated training sequence $\widehat{TS}_{CCI}$ and synchronisation position $\widehat{SP}_{CCI}$ are taken as the best match according to the following formula:

$$\left(\widehat{TS}_{CCI}, \widehat{SP}_{CCI}\right) = \arg\max_{t,i}\left(\sum_{l=1}^{M}\left|d_{t,l}^{i}\right|^{2}\right) \tag{6}$$

which are fed to a co-channel interference rejection unit, which can be of any suitable type, and which is not part of the invention.

Theoretical considerations and experiments have shown that a much better synchronisation performance for the co-channel interferer can be obtained by subtracting only a fraction $c_t$, $0 < c_t \leq 1$, of the estimated desired signal from the received signal before the CCI detection is performed, rather than subtracting the entire estimated desired signal as is done conventionally. The fraction $c_t$ depends on the uncertainty of the estimate of the desired signal, ie on the noise received together with the signal. Therefore, preferably also the noise is estimated, $\hat{\sigma}^2$. The control unit chooses the weighting factor $c_t$ depending on the noise and the uncertainty of the estimates of the channel parameters and the received symbols. Thus, if the uncertainty of the estimate of the desired signal is low, a value of $c_t$ close to, or possibly equal to, 1 is chosen, and if the uncertainty is high, a lower value is chosen.

The weighting factor $c_t$ can be varied not only with changing channel and reception quality but also over each burst. The training sequence of the desired bursts is known, since $\hat{u}_t = u_t^{TS}$, and during the training sequence a value of $c_t$ close to 1, or possibly equal to 1, is chosen. During the data sequences of each burst the uncertainty of the estimate of the signal is often higher, and a correspondingly lower value of $c_t$ is chosen, typically 0.6 - 0.7, but lower or higher values may also be used. Note that if the channel and the data symbols are known completely, then the optimal value is $c_t = 1$, ie the entire desired signal is subtracted, whereby the residual signal $r_t$ is the co-channel interference signal. In such cases the co-channel interference signal can then be determined completely and thus also eliminated completely.

**Reference**

[1] J. Proakis, Digital Communications, McGraw-Hill Inc., New York, 1995.

**Claims**

1.   A method of detecting co-channel interference in a mobile station when used in a wireless cellular communications system including at least a home base station A and a remote base station B both using the same transmit frequency $f_0$, the method comprising the following steps:

  - receiving a signal $y_t$ with bursts of desired symbols $U$ transmitted by the home base station A through a home channel with home channel parameters $H$,
  - setting a receive frequency of the mobile station to the transmit frequency $f_0$ of the home base station, and, if a signal $y_t$ with bursts of undesired symbols V transmitted by the remote base station B is received through a co-channel with co-channel parameters performing the following steps:
  - determining a synchronisation position of the signal received from the home base station A, as the position within a received burst at which a training sequence starts,
  - estimating radio channel parameters H of the home channel,
  - estimating symbols $\hat{u}$ transmitted by the home base station A,
  - multiplying the estimated symbols $\hat{u}$ transmitted by the home base station A by a weighting factor $c_t$, $0 < c_t \leq 1$, to obtain weighted estimated symbols $x_t$,
  - subtracting the weighted estimated symbols $x_t$ from the received signals $y_t$ to obtain a residual signal $r_t$, and
  - estimating, using the received signal $y_t$ and the residual signal $r_t$, a training sequence $\widehat{TS}_{CCI}$ of bursts transmitted by the remote base station B, and a synchronisation position $\widehat{SP}_{CCI}$ of bursts transmitted by the remote station B, as the position at which the training sequence $\widehat{TS}_{CCI}$ starts.

2.   A method according to claim 1, further comprising the step of

  - correlating the residual signal $r_t$ with all possible training sequences $TS_i$, i integer frim 1 to N, for the bursts of undesired symbols V, to obtain correlation results $d_{t,l}^{i}$ for $TS_i$ at time offset t for burst l.

**3.** A method according to claim 2, further comprising the step of

- accumulating the correlation results $d_{t,l}^{i}$ over a predetermined plurality M of bursts.

**4.** A method according to claim 3, wherein the estimated synchronisation position $\widehat{SP}_{CCI}$ and the estimated training sequence $\widehat{TS}_{CCI}$ of bursts transmitted by the remote base station B are taken as the best match according to the formula

$$(\widehat{TS}_{CCI}, \widehat{SP}_{CCI}) = \arg\max_{t,i} \left( \sum_{l=1}^{M} \left| d_{t,l}^{i} \right|^2 \right).$$

**5.** The method according to any one of claims 1-4, further comprising the step of

- rejecting bursts of undesired symbols.

**6.** A method according to any one of claims 1-5, further comprising the steps of

- estimating noise $\hat{\sigma}_{\varepsilon}^{2}$ received with the received signal $y_t$, and
- generating the weighting factor $c_t$ in dependence on estimated channel parameters $\hat{H}$, on the estimated noise $\hat{\sigma}_{\varepsilon}^{2}$, and on estimated symbols $\hat{u}$.

**7.** A method according to claim 6, wherein the weighting factor $c_t$ is generated in dependence on the estimated noise $\hat{\sigma}_{\varepsilon}^{2}$, and on individual estimated symbols $\hat{u}$ in a burst.

**8.** A mobile station for use in a wireless cellular communications system including at least two base stations using the same frequency $f_0$, the mobile station comprising means for carrying out the steps of the method according to any one of claims 1-7.


**Patentansprüche**

**1.** Verfahren zum Detektieren von Gleichkanalstörungen in einer Mobilstation, wenn diese in einem drahtlosen zellulären Kommunikationssystem eingesetzt wird, mit mindestens einer Heimatbasisstation A und einer entfernten Basisstation B, die beide die gleiche Übertragungsfrequenz $f_0$ einsetzen, wobei das Verfahren die folgenden Schritte umfasst:

- Empfangen eines Signals $y_t$ mit Bursts von gewünschten Symbolen U, die von der Heimatbasisstation A durch einen Heimatkanal mit Heimatkanalparametern H übertragen worden sind,
- Einstellen einer Empfangsfrequenz der Mobilstation auf die Übertragungsfrequenz $f_0$ der Heimatbasisstation, und, falls ein Signal $y_t$ mit Bursts von ungewünschten Symbolen V, das von der entfernten Basisstation B übertragen worden ist, durch einen Gleichkanal mit Gleichkanalparametern empfangen worden ist, Durchführen der folgenden Schritte:
- Bestimmen einer Synchronisationsposition des von der Heimatbasisstation A empfangenen Signals als die Position innerhalb eines empfangenen Bursts, an dem eine Trainingssequenz beginnt,
- Schätzen der Funkkanalparameter $H$ des Heimat kanals,
- Schätzen der Symbole $\hat{u}$, die von der Heimatbasisstation A übertragen worden sind,
- Multiplizieren der geschätzten Symbole $\hat{u}$, die von der Heimatbasisstation A übertragen worden sind, mit einem Gewichtsfaktor $c_t$, $0 < c_t <= 1$, um gewichtete geschätzte Symbole $x_t$ zu erhalten,
- Subtrahieren der gewichteten geschätzten Symbole $x_t$ von den empfangenen Signalen $y_t$, um ein residuelles Signal $r_t$ zu erhalten, und

- Schätzen, unter Einsatz des empfangenen Signals $y_t$ und des residuellen Signals $r_t$, einer Trainingssequenz $\widehat{TS}_{CCI}$ der Bursts, die von der entfernten Basisstation B übertragen worden sind, und einer Synchronisationsposition $\widehat{SP}_{CCI}$ von Bursts, die von der entfernten Station B übertragen worden sind, als die Position, an der die Trainingssequenz $\widehat{TS}_{CCI}$ startet.

2. Verfahren nach Anspruch 1, weiterhin umfassend den Schritt des

   - Korrelierens des residuellen Signals $r_t$ mit allen möglichen Trainingssequenzen $TS_i$, wobei i eine ganze Zahl zwischen 1 und N ist, für die Bursts von unerwünschten Symbolen V, um Korrelationsergebnisse $d_{t,l}^i$ für $TS_i$ an der Offsetzeit t für den Burst l zu erhalten.

3. Verfahren nach Anspruch 2, weiterhin umfassend den Schritt des

   - Ansammelns der Korrelationsergebnisse $d_{t,l}^i$ über eine vorbestimmte Mehrzahl M von Bursts.

4. Verfahren nach Anspruch 3, wobei die geschätzte Synchronisationsposition $\widehat{SP}_{CCI}$ und die geschätzte Trainingssequenz $\widehat{TS}_{CCI}$ von Bursts, die von der entfernten Basisstation B übertragen worden sind, als die beste Übereinstimmung mit der Formel genommen werden:

$$(\widehat{TS}_{CCI}, \widehat{SP}_{CCI}) = \arg\max_{t,i} \left( \sum_{l=1}^{M} \left| d_{t,l}^i \right|^2 \right).$$

5. Verfahren nach einem der Ansprüche 1 bis 4, weiterhin umfassend den Schritt des

   - Zurückweisens der Bursts von unerwünschten Symbolen.

6. Verfahren nach einem der Ansprüche 1 bis 5, weiterhin umfassend die Schritte des

   - Schätzens des Rauschens $\hat{\sigma}_\varepsilon^2$, das mit dem empfangenen Signal $y_t$ empfangen worden ist, und
   - Erzeugens des gewichtenden Faktors $c_t$ in Abhängigkeit von den geschätzten Kanalparametern $\hat{H}$, von dem geschätzten Rauschen $\hat{\sigma}_\varepsilon^2$ und von den geschätzten Symbolen û.

7. Verfahren nach Anspruch 6, bei dem der gewichtende Faktor $c_t$ in Abhängigkeit von dem geschätzten Rauschen $\hat{\sigma}_\varepsilon^2$ und von individuell geschätzten Symbolen û in einem Burst erzeugt wird.

8. Mobilstation zum Einsatz in einem drahtlosen zellulären Kommunikationssystem mit mindestens zwei Basisstationen, die die gleiche Frequenz $f_0$ einsetzen, wobei die Mobilstation Mittel umfasst, um die Schritte des Verfahrens gemäss einem der Ansprüche 1 bis 7 auszuführen.

**Revendications**

1. Procédé pour la détection d'interférences de co-canal dans une station mobile, quand celle-ci est utilisée dans un système de communication cellulaire sans-fil, avec au moins une station de base mère A et une station de base éloignée B, qui utilisent toutes les deux la même fréquence de transmission $f_0$, où le procédé comprend les étapes suivantes:

   - réception d'un signal $y_t$ avec des bursts de symboles souhaités U, qui ont été transmis de la station de base mère A par un canal mère avec des paramètres de canal mère H,
   - placement d'une fréquence de réception de la station mobile sur la fréquence de transmission $f_0$ de la station de base mère, et, si un signal $y_t$ avec des bursts de symboles non-souhaités V, transmis par la station de base éloignée B, a été reçu par un co-canal avec des paramètres co-canal, exécuter les étapes suivantes:
   - détermination d'une position de synchronisation du signal reçu par la station de base mère A en tant que position à l'intérieur du burst reçu où une séquence d'entraînement commence,

- estimation des paramètres de canal radio $H$ du canal mère,
- estimation des symboles û, qui ont été transmis par la station de base mère A,
- multiplication des symboles estimés û, qui ont été transmis par la station de base mère A, avec un facteur de poids $c_t$, avec $0 < c_t <= 1$, pour obtenir des symboles estimés pondérés $x_t$,
- soustraction des symboles estimés pondérés $x_t$ des signaux reçus $y_t$, pour recevoir un signal résiduel $r_t$, et
- estimation, avec utilisation du signal reçu $y_t$ et du signal résiduel $r_t$, d'une séquence entraînement $\widehat{TS}_{CCI}$ des bursts, qui ont été transmis par la station de base éloignée B, et d'une position de synchronisation $\widehat{SP}_{CCI}$ de bursts, qui ont été transmis par la station éloignée B, en tant que position où commence la séquence entraînement $\widehat{TS}_{CCI}$.

2. Procédé selon la revendication 1, comprenant aussi l'étape de

- corrélation du signal résiduel $r_t$ avec toutes les séquences entraînement possibles $TS_i$, où i est un entier entre 1 et N, pour les bursts des symboles non-souhaités V, pour obtenir des résultats de corrélation $d_{t,l}^i$ pour les $TS_i$ au temps offset t pour le burst l.

3. Procédé selon la revendication 2, comprenant aussi l'étape de

- accumulation des résultats de corrélation $d_{t,l}^i$ pour une pluralité prédéterminée M de bursts.

4. Procédé selon la revendication 3, où la position de synchronisation estimée $\widehat{SP}_{CCI}$ et la séquence entraînement estimée $\widehat{TS}_{CCI}$ de bursts, qui ont été transmis par la station de base éloignée B, sont pris en tant que meilleure corrélation selon la formule:

$$(\widehat{TS}_{CCI}, \widehat{SP}_{CCI}) = \arg\max_{t,i} \left( \sum_{l=1}^{M} \left| d_{t,l}^i \right|^2 \right).$$

5. Procédé selon l'une des revendications 1 à 4, comprenant aussi l'étape de

- rejet des bursts avec des symboles non-souhaités.

6. Procédé selon l'une des revendications 1 à 5, comprenant aussi les étapes de

- estimation du bruit $\hat{\sigma}_\varepsilon^2$, qui a été reçu avec le signal reçu $y_t$, et
- génération d'un facteur de pondération $c_t$ en dépendance des paramètres estimées $\hat{H}$, du bruit estimé $\hat{\sigma}_\varepsilon^2$ et des symboles estimés û.

7. Procédé selon la revendication 6, où le facteur de pondération $c_t$ est généré en dépendance du bruit estimé $\hat{\sigma}_\varepsilon^2$ et des symboles estimés individuelles û dans un burst.

8. Une station mobile pour une utilisation dans un système de communication cellulaire sans fil avec au moins deux stations de base, qui utilisent la même fréquence $f_0$, où la station mobile comprend des moyens pour exécuter les étapes du procédé selon l'une des revendications 1 à 7.

Fig. 1

Fig. 2   PRIOR ART

Fig. 3

Fig. 4